# EUROPÄISCHE PATENTSCHRIFT

(11) **EP 1 052 119 B1**
(45) Veröffentlichungstag und Bekanntmachung des Hinweises auf die Patenterteilung: **09.10.2002**
(21) Anmeldenummer: 00109579.3
(22) Anmeldetag: 05.05.2000
(51) Int. Cl.: B60C 23/04

(54) **Verfahren zur Durchführung der Zuordnung von Reifendruckkontrollvorrichtungen zu Radpositionen in einem Reifendruckkontrollsystem eines Fahrzeuges**
Method for determining the position of each wheel for a tyre pressure monitoring system of a motor car
Procédé pour déterminer la position des roues dans un système de surveillance de pression des pneumatiques d'un véhicule

(30) Priorität: 08.05.1999 DE 19921413
(43) Veröffentlichungstag der Anmeldung: 15.11.2000
(73) Patentinhaber: Continental Aktiengesellschaft, 30165 Hannover (DE)
(72) Erfinder: Oldenettel, Holger, 30826 Garbsen (DE); Klodmann, Wolfgang, 31582 Nienburg (DE); Behrends, Holger, 30559 Hannover (DE); Ernst, Gerhard, Dr., 30629 Hannover (DE)

(56) Entgegenhaltungen:
- EP-A- 0 895 879

## Beschreibung

Die Erfindung betrifft ein Verfahren zur Durchführung der Zuordnung von Reifendruckkontrollvorrichtungen zu Radpositionen in einem Reifendruckkontrollsystem eines Kraftfahrzeuges gemäß dem Oberbegriff des Anspruchs 1.

Aus sicherheitstechnischen Gründen muß der Reifendruck von Kraftfahrzeugen regelmäßig überprüft werden, was von dem Kraftfahrzeugführer aus unterschiedlichen Gründen häufig versäumt wird. Deshalb sind bereits Reifendruckkontrollsysteme entwickelt worden, die jedem Rad zugeordnet eine Reifendruckkontrollvorrichtung enthalten, die den Reifendruck der Kraftfahrzeugreifen automatisch messen und zumindest eine kritische Abweichung von einem Sollreifendruck dem Kraftfahrzeugführer melden. Die Reifendruckkontrollvorrichtungen können z. B. in den Reifen einvulkanisiert oder eingeklebt sein oder auch am oder im Ventil bzw. an oder in der Felge befestigt sein. Entsprechende Ausbildungen sind bekannt.

Aus der gattungsgemäßen DE 197 34 323 ist ein Reifendruckkontrollsystem bekannt, bei dem jedem Reifen des Kraftfahrzeuges jeweils eine Reifendruckkontrollvorrichtung zugeordnet ist. Jede Reifendruckkontrollvorrichtung übermittelt in regelmäßigen Abständen ein gemessenes Drucksignal zusammen mit einer individuellen Kennung an eine Zentraleinheit. Durch die Übermittlung einer individuellen Kennung wird vermieden, daß die an die Zentraleinheit übermittelten Daten beispielsweise mit Daten verwechselt werden, die von einem anderen Kraftfahrzeug ausgesendet werden. In der Zentraleinheit sind Wertepaare der Form (Kennung der Reifendruckkontrollvorrichtung/Radposition) für jedes Rad des Kraftfahrzeuges gespeichert, so daß durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignales von einem vorgegebenen Wert an einer Radposition wird dem Kraftfahrzeugführer von der Zentraleinheit angezeigt, so daß dieser geeignete Maßnahmen einleiten kann.

Die Ausführungen zeigen, daß das aus der DE 197 34 323 bekannte Reifendruckkontrollsystem nur dann einwandfrei funktionieren kann, wenn in der Zentraleinheit die Zuordnungen (Kennung der Reifendruckkontrollvorrichtungen /Radposition) richtig gespeichert sind. Dementsprechend muß zumindest nach jedem Reifenwechsel am Kraftfahrzeug eine neue Zuordnung vorgenommen werden, was bei dem aus der oben genannten Druckschrift bekannten Reifendruckkontrollsystem wie folgt geschieht: Jeder Reifendruckkontrollvorrichtung ist ein Umdrehungssensor zugeordnet, der für ein erstes Zeitintervall eingeschaltet wird. Während des ersten Zeitintervalls wird aus dem Signal des Umdrehungssensors eine erste definierte Winkelposition des Rades, dem der Umdrehungssensor zugeordnet ist, bestimmt. Die Reifenkontrollvorrichtung übermittelt zu einem ersten Zeitpunkt t₁, in dem das Rad diese erste definierte Winkelposition einnimmt, die individuelle Kennung an die Zentraleinheit. Der gleiche Umdrehungssensor wird später für ein zweites Zeitintervall eingeschaltet, währenddem aus seinem Signal die gleiche definierte Winkelposition des Rades bestimmt wird, wie im ersten Zeitintervall. Die Reifendruckkontrollvorrichtung übermittelt zu einem zweiten Zeitpunkt t₂, in dem das Rad diese definierte Winkelposition einnimmt, ihre individuelle Kennung an die Zentraleinheit, wobei die Zentraleinheit weiß, daß das Rad, von dem aus die individuelle Kennung übermittelt worden ist, zwischen den Zeitpunkten t₁ und t₂ eine ganzzahlige Anzahl von Umdrehungen gemacht hat. In der Zentraleinheit wird nun geprüft, von welchem Drehzahlsensor (bei den Drehzahlsensoren handelt es sich um ortsfeste Sensoren eines Schlupfregelsystems) bzw. von welcher Radposition eine ganzzahlige Umdrehungszahl zwischen den Zeitpunkten t₁ und t₂ übermittelt wurde. Die entsprechende Radposition wird in der Zentraleinheit der von der Reifendruckkontrollvorrichtung übermittelten individuellen Kennung zugeordnet. Die übrigen Reifendruckkontrollvorrichtungen des Kraftfahrzeuges werden in der gleichen Art und Weise ihrer Radposition zugeordnet.

Mit dem aus der DE 197 34 323 gekannten Verfahren ist eine zuverlässige Zuordnung von Reifendruckkontrollvorrichtungen zu den Radpositionen in einem Reifendruckkontrollsystem eines Kraftfahrzeuges möglich. Das Reifendruckkontrollsystem benötigt jedoch in jeder Reifendruckkontrollvorrichtung einen Umdrehungssensor, was die Kosten des Systems in die Höhe treibt. Darüber hinaus belasten die Umdrehungssensoren die Batterien der Reifendruckkontrollvorrichtungen, obwohl sie nur während kurzer Zeitintervalle eingeschaltet werden. Hierdurch verkürzt sich die Lebensdauer der Batterien, so daß die angestrebte hohe Batterielebensdauer nur schwierig zu realisieren ist.

Bei einem aus der DE 42 05 911 A1 bekannten Reifendruckkontrollsystem wird eine neue Zuordnung durchgeführt, indem die Intensität der von den einzelnen Reifendruckkontrollvorrichtungen gesendeten Signale von Empfängern, von denen jeweils einer einer Radposition fest zugeordnet ist, gemessen wird und jedes von einer Reifendruckkontrollvorrichtung ausgesendete Signal der Radposition zugeordnet wird, an welcher es die höchste Signalintensität erzeugt (beispielsweise wird die Signalintensität der Reifendruckkontrollvorrichtung, die sich in dem Reifen vorne links befindet, an dem Empfänger am größten sein, der der Radposition vorne links zugeordnet ist, so daß eine entsprechende Zuordnung festgestellt werden kann). Die entsprechenden Zuordnungen werden in der Zentraleinheit gespeichert.

Für das erläuterte Zuordnungsverfahren ist an jeder Radposition des Kraftfahrzeuges ein Empfänger notwendig, wodurch ebenfalls die Kosten des aus der DE 42 05 911 A1 bekannten Reifendruckkontrollsystems in die Höhe getrieben werden.

Der Erfindung liegt die Aufgabe zugrunde, ein Verfahren zur Durchführung der Zuordnung von Reifendruckkontrollvorrichtungen zu Radpositionen in einem Reifendruckkontrollsystem eines Kraftfahrzeuges zu schaffen, das sich mit einem preiswerten Reifendruckkontrollsystem durchführen läßt.

Die Aufgabe wird durch die Kombination der Merkmale des Anspruchs 1 gelöst. Zu dem Begriff "verlängertes Hochfrequenzsignal" ist folgendes festzustellen: Jede Reifendruckkontrollvorrichtung sendet ihre Daten, also insbesondere ihre individuelle Kennung und das Drucksignal, in Form von Hochfrequenzsignalen aus. Unter einem verlängerten Hochfrequenzsignal ist ein Hochfrequenzsignal zu verstehen, das wesentlich länger (also mindestens eine Größenordnung länger) ist, als die üblicherweise von einer Reifendruckkontrollvorrichtung ausgesendeten Hochfrequenzsignale.

Vorzugsweise wird jedes verlängerte Hochfrequenzsignal von der Reifendruckkontrollvorrichtung mit konstanter Maximalamplitude ausgesendet, die in Folge der Rotation des Rades, von dem aus das verlängerte Hochfrequenzsignal gesendet wird, einen vom Rotationswinkel des Rades bzw. von der Zeit abhängigen individuellen Verlauf bekommt, so wie es auch in Anspruch 2 beansprucht wird.

Die Erfindung macht sich die Beobachtung zunutze, daß die konstante Maximalamplitude eines ausgesendeten Hochfrequenzsignals durch die Rotation des Rades einen vom Rotationswinkel des Rades bzw. von der Zeit abhängigen individuellen Verlauf bekommt, so daß anhand des Signalverlaufes auf eine relative Winkelposition des Rades rückgeschlossen werden kann. Der individuelle Verlauf ist wahrscheinlich auf die unterschiedlichen geometrischen Gegebenheiten in den Radkästen des Kraftfahrzeuges und auf die zeitliche Veränderung des Abstandes einer Reifendruckkontrollvorrichtung zu dem Radkasten, an dem sie bei der Rotation vorbeigefüht wird, zurückzuführen.

Die mit der Erfindung erzielten Vorteile sind insbesondere darin zu sehen, daß zur Durchführung des Verfahrens weder ein Empfänger an jeder Radposition (wie bei der DE 42 05 911 A1), noch ein Umdrehungssensor in jeder Reifendruckkontrollvorrichtung (wie bei der DE 197 34 323) notwendig ist. Vielmehr bedarf es zur Durchführung des Zuordnungsverfahrens keiner Bestandteile, die nicht ohnehin im Reifendruckkontrollsystem bzw. im Kraftfahrzeug (wie die Drehzahlsensoren, die Bestandteile eines Schlupfregelsystems sind) vorhanden sind. Somit läßt sich das Zuordnungsverfahren mit Hilfe eines preiswerten Reifendruckkontrollsystems durchführen. Weitere Vorteile der Erfindung sind darin zu sehen, daß das Zuordnungsverfahren genauso zuverlässig funktioniert, wie die bisher bekannt gewordenen Zuordnungsverfahren und die Batterien der Reifendruckkontrollvorrichtungen wenig belastet.

Gemäß einer Weiterbildung der Erfindung nach Anspruch 3 ist jedes Zeitintervall, während dem ein verlängertes Hochfrequenzsignal von einem Rad aus gesendet wird, mindestens so lang, daß das Rad in dem Zeitintervall mindestens eine Umdrehung macht. Der Vorteil dieser Weiterbildung ist darin zu sehen, daß das erste und zweite von einer Reifendruckkontrollvorrichtung ausgesendete verlängerte Hochfrequenzsignal zwangsläufig bereichsweise den gleichen zeitlichen Verlauf aufweisen, aus dem eine übereinstimmende Winkelposition bestimmt werden kann.

Gemäß einer Weiterbildung der Erfindung nach Anspruch 4 ist in jeder Reifendruckkontrollvorrichtung eine bestimmte Zeitdauer vorgegeben, die für alie von dieser Reifendruckkontrollvorrichtung ausgesendeten verlängerten Hochfrequenzsignale gleich ist. Vorzugsweise ist diese Zeitdauer so bemessen, daß die Wahrscheinlichkeit, daß das Rad während der Aussendung eines verlängerten Hochfrequenzsignals eine ganze Umdrehung macht, sehr hoch bzw. die Umdrehungsgeschwindigkeit, bei dem diese Bedingung zutrifft, sehr niedrig ist. In diesem Fall ist mit einer hohen Wahrscheinlichkeit gegeben, daß das erste und zweite von einer Reifendruckkontrollvorrichtung ausgesendete verlängerte Hochfrequenzsignal bereichsweise übereinstimmen. Der Vorteil der Weiterbildung ist darin zu sehen, daß sie sich einfach realisieren läßt.

Eine Weiterbildung der Erfindung gemäß Anspruch 5 ist dadurch gekennzeichnet, daß
- jede Reifendruckkontrollvorrichtung über einen Fliehkraftsensor verfügt, der oberhalb einer vorgegebenen Umdrehungszahl des Rades, dem die Reifendruckkontrollvorrichtung zugeordnet ist, ein Signal erzeugt, und daß
- eine Reifendruckkontrollvorrichtung ein verlängertes Hochfrequenzsignal mit vorgegebener Länge nur dann sendet, wenn das Signal des Fliehkraftsensors vorliegt.

Die Länge wird in Abhängigkeit von der vorgegebenen Umdrehungszahl, bei der der Fliehkraftsensor ein Signal erzeugt, so vorgegeben, daß sichergestellt ist, daß das Rad während der Aussendung des verlängerten Hochfrequenzsignals mindestens eine ganze Umdrehung macht (erzeugt der Fliehkraftsensor das Signal also bei x Umdrehungen pro Minute, so wird für die Länge der verlängerten Hochfrequenzsignale also eine Zeit von mindestens 1/x Minuten vorgegeben). Der Vorteil der Weiterbildung gemäß Anspruch 5 ist darin zu sehen, daß das erste und das zweite von einer Reifendruckkontrollvorrichtung ausgesendete Hochfrequenzsignal mit Sicherheit bereichsweise übereinstimmen.

Eine Weiterbildung der Erfindung gemäß Anspruch 6 ist dadurch gekennzeichnet, daß das Reifendruckkontrollsystem über einen zentralen Sender verfugt und jede der Reifendruckkontrollvorrichtungen über einen Empfänger verfügt und daß folgende Verfahrensschritte durchgeführt werden:
- der zentrale Sender sendet ein Signal an alle Reifendruckkontrollvorrichtungen
- unmittelbar nach Empfang des Signals sendet jede Reifendruckkontrollvorrichtung ein verlängertes Hochfrequenzsignal an die Zentraleinheit.

Vorzugsweise sendet der zentrale Sender zusätzlich eine Information über die Länge des von den Reifendruckkontrollvorrichtungen auszusendenden verlängerten Hochfrequenzsignals an diese aus, so wie es in Anspruch 7 beansprucht ist. Bevorzugt wird eine von der Fahrzeuggeschwindigkeit abhängige Länge übermittelt, die so bemessen ist, daß sichergestellt ist, daß die verlängerten Hochfrequenzsignale mindestens so lang sind, daß jedes Rad, von dem aus ein verlängertes Hochfrequenzsignal gesendet wird, mindestens eine Umdrehung während der Sendung macht. Hiermit werden die bereits oben erläuterten Vorteile erreicht.

Gemäß einer Weiterbildung der Erfindung nach Anspruch 8 wird das Zuordnungsverfahren durch die Betätigung eines Schalters gestartet. Der Schalter ist vorzugsweise durch den Kraftfahrzeugführer zu betätigen. Der Vorteil dieser Weiterbildung ist darin zu sehen, daß das Zuordnungsverfahren nur dann durchgeführt wird, wenn es notwendig ist, z. B. also nach einem Reifenwechsel.

Gemäß einer Weiterbildung der Erfindung nach Anspruch 9 wird das Zuordnungsverfahren nach Einschalten der Zündung des Kraftfahrzeuges automatisch gestartet, wenn diese zuvor für einen vorgegebenen Zeitraum ausgeschaltet war. Der vorgegebene Zeitraum wird so gewählt, daß in ihm ein Reifenwechsel stattgefunden haben könnte (also ca. 10 Minuten - 30 Minuten lang), der eine neue Zuordnung notwendig macht. Der Vorteil dieser Weiterbildung ist darin zu sehen, daß das Verfahren vollkommen automatisch nur dann durchgeführt wird, wenn eine neue Zuordnung notwendig sein könnte.

Gemäß einem Ausführungsbeispiel der Erfindung nach Anspruch 10 sind die von den Reifendruckkontrollvorrichtungen übertragenen Signale amplitudenmoduliert und jedes verlängerte Hochfrequenzsignal ist ein separates Signal, das mit konstanter Maximalamplitude gesendet wird.

Gemäß einem zweiten Ausführungsbeispiel der Erfindung nach Anspruch 11 sind die von den Reifendruckkontrollvorrichtungen übertragenen Signale frequenzmoduliert und werden mit konstanter Maximalamplitude ausgesendet, wobei die individuelle Kennung in dem verlängerten Hochfrequenzsignal enthalten ist.

Gemäß einer Weiterbildung der Erfindung nach Anspruch 12 wird im ersten und zweiten verlängerten Hochfrequenzsignal der erste und zweite Zeitpunkt, in dem das Rad eine übereinstimmende relative Winkelposition einnimmt, durch Kreuzkorrelation bestimmt. Bei der Kreuzkorrelation handelt es sich um ein gängiges mathematisches Verfahren (näheres s. Figurenbeschreibung). Der Vorteil dieser Weiterbildung ist darin zu sehen, daß eine übereinstimmende relative Winkelposition in dem verlängerten Hochfrequenzsignal auf einfache Art und Weise zuverlässig aufgefunden werden kann.

Weitere Vorteile und ein Ausführungsbeispiel der Erfindung werden im Zusammenhang mit den nachstehenden Figuren erläutert, darin zeigt:
- Fig. 1: ein Kraftfahrzeug mit einem Reifendruckkontrollsystem,
- Fig. 2: ein Diagramm,
- Fig. 3: ein Diagramm,
- Fig. 4: ein Diagramm.

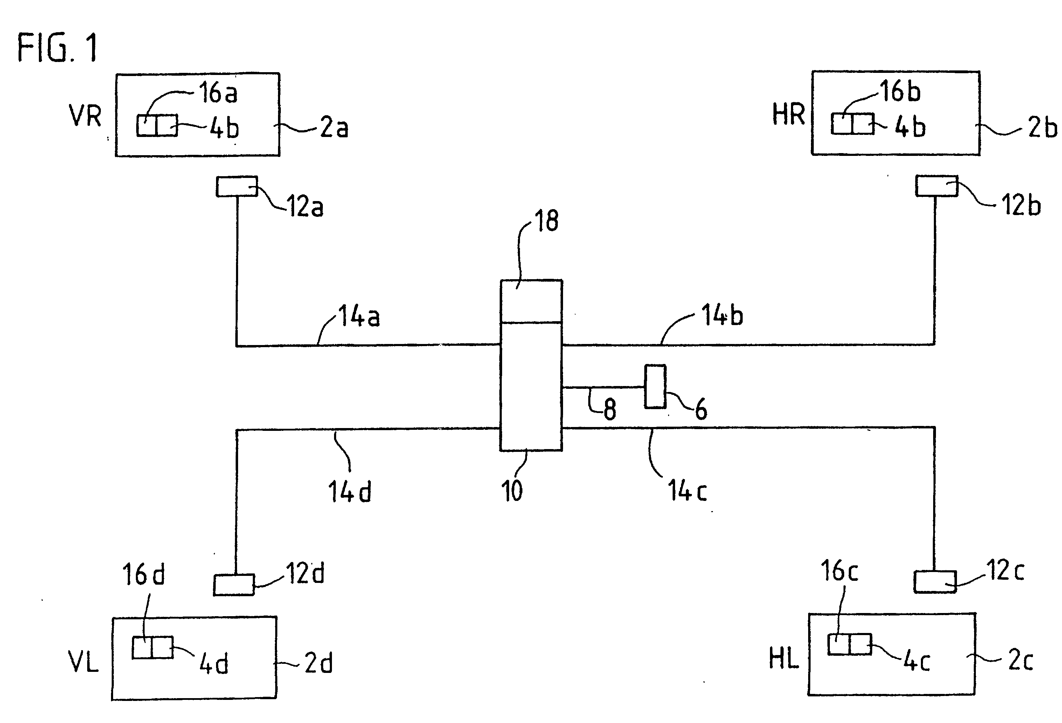

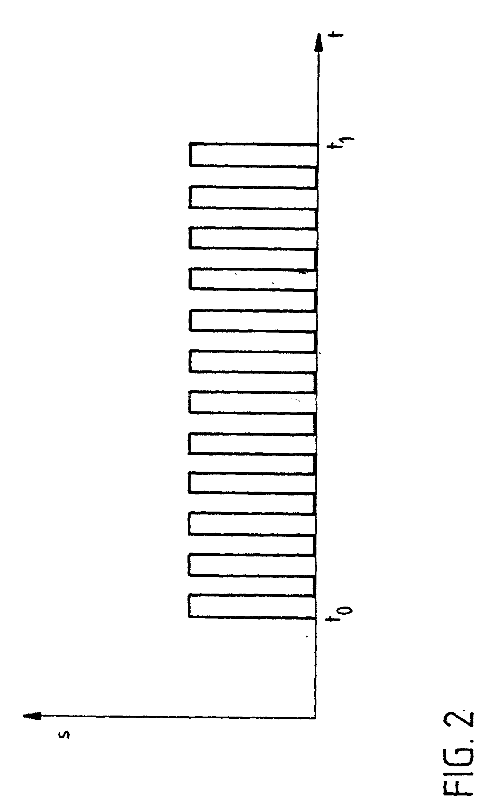

Figur 1 zeigt in stark schematisierter Darstellung ein Kraftfahrzeug mit Rädern 2a bis 2d, das über ein Reifendruckkontrollsystem verfügt. Das Reifendruckkontrollsystem enthält u. a. Reifendruckkontrollvorrichtungen 4a bis 4d, von denen jeweils eine in dem Reifen der Räder 2a bis 2d enthalten ist (z. B. im Reifengummi bzw. im oder am Ventil), oder von denen jeweils eine einem Reifen zugeordnet ist, z. B. durch entsprechende Positionierung und Befestigung an der Felge. Die Reifendruckkontrollvorrichtungen 4a bis 4d verfügen über einen Sender, mit dessen Hilfe sie Daten in Form von Hochfrequenzsignalen an einen Empfänger 6 berührungslos übermitteln können. Der Empfänger 6 überträgt die von den Reifendruckkontrollvorrichtungen 4a bis 4d empfangenen Daten über den Übertragungsweg 8 an eine Zentraleinheit 10. Im einfachsten Fall ist der Empfänger 6 als Empfangsantenne ausgebildet, mit Hilfe der die Zentraleinheit 10 die übermittelten Daten empfängt. Das Reifendruckkontrollsystem enthält ferner Drehzahlsensoren 12a bis 12d, die an dem Kraftfahrzeug befestigt sind und jeweils einem Rad 2a bis 2d des Kraftfahrzeuges ortsfest zugeordnet sind. Jeder Drehzahlsensor 12a bis 12d steht über einen Übertragungsweg 14a bis 14d ebenfalls mit der Zentraleinheit in Verbindung. Anhand des Übertragungsweges kann die Zentraleinheit 10 das Signal eines Drehzahlsensors 12a bis 12d einer Radposition zuordnen. Liegt beispielsweise an dem Übertragungsweg 14a ein Signal an, so ist dies ein Zeichen für die Zentraleinheit 10 dafür, daß dieses Signal von dem Drehzahlsensor 12a übermittelt wird, der sich in der Radposition "vorne rechts" (in der Figur sind die Radpositionen "vorne rechts" mit VR, "hinten rechts" mit HR, "hinten links" mit HL und "vorne links" mit VL abgekürzt) befindet. Wie das Signal der Drehzahlsensoren 12a bis 12d im einzelnen aussieht, wird im Zusammenhang mit der Figur 2 erläutert.

Im normalen Betrieb übermitteln die Reifendruckkontrollvorrichtungen 4a bis 4d jeweils eine individuelle Kennung und Druckdaten an die Zentraleinheit 10. Dort werden die übermittelten Druckdaten ausgewertet und mit vorgegebenen Druckdaten verglichen. Weichen die übermittelten Druckdaten über ein bestimmtes Maß hinaus von den vorgegebenen Druckdaten ab, so wird dies dem Kraftfahrzeugführer durch die Zentraleinheit 10 angezeigt.

In einem Zuordnungsmodus, in dem die Reifendruckkontrollvorrichtungen 4a bis 4d den Radpositionen im Reifendruckkontrollsystem zugeordnet werden, übermittelt jede Reifendruckkontrollvorrichtung 4a bis 4d in zeitlichen Abständen zusätzlich zu der individuellen Kennung und ggf. den Druckdaten ein verlängertes Hochfrequenzsignal an die Zentraleinheit 10. Mit Hilfe der verlängerten Hochfrequenzsignale und der von den Drehzahlsensoren 12a bis 12d an die Zentraleinheit 10 übermittelten Signale wird in der Zentraleinheit 10 eine Zuordnung der Reifendruckkontrollvorrichtungen 4a bis 4d zu den Radpositionen durchgeführt. Dies wird im einzelnen mit den nachstehenden Figuren erläutert.

Jedes übermittelte Hochfrequenzsignal ist vorzugsweise so lang, daß das entsprechende Rad 2a bis 2d, von dem es ausgesendet wird, während der Dauer des Signals mindestens eine Umdrehung macht. Dies kann beispielsweise dadurch weitestgehend sichergestellt werden, daß in den Reifendruckkontrollvorrichtungen 4a bis 4d eine Zeitdauer für die verlängerten Hochfrequenzsignale vorgegeben wird, die so gewählt ist, daß schon bei niedrigen Geschwindigkeiten des Kraftfahrzeuges jedes Rad 2a bis 2d während dieser Länge mindestens eine Umdrehung macht. Zusätzlich kann jede Reifendruckkontrollvorrichtung 4a bis 4d über einen Fliehkraftsensor 16a bis 16d verfügen, der oberhalb einer vorgegebenen Umdrehungszahl des Rades 2a bis 2d ein Signal erzeugt, wobei eine Reifendruckkontrollvorrichtung ein verlängertes Hochfrequenzsignal mit der vorgegebenen Länge nur dann sendet, wenn das Signal des Fliehkraftsensors vorliegt. Hierbei ist die Länge des verlängerten Hochfrequenzsignals so auf die Umdrehungszahl, bei der der Fliehkraftsensor 16a bis 16d ein Signal erzeugt, abgestimmt, daß das Rad 2a bis 2d mindestens eine Umdrehung während der Aussendung des verlängerten Hochfrequenzsignals macht.

Alternativ ist es möglich, daß das Reifendruckkontrollsystem über einen zentralen Sender 18 und jede Reifendruckkontrollvorrichtung über einen (nicht eingezeichneten) Empfänger verfügt. Zur Auslösung des Zuordnungsverfahrens sendet der zentrale Sender 18 ein Signal an alle Luftdruckkontrollvorrichtungen 4a bis 4d, die unmittelbar nach Empfang des Signals ein verlängertes Hochfrequenzsignal an die Zentraleinheit 10 übermitteln. Zusätzlich kann der zentrale Sender eine Information über die Länge des verlängerten Hochfrequenzsignals übermitteln, das von den Reifendruckkontrollvorrichtungen 4a bis 4d übertragen werden soll. Die Länge wird von dem zentralen Sender 18 vorzugsweise von der Geschwindigkeit des Kraftfahrzeuges abhängig derart vorgegeben, daß sichergestellt ist, daß jedes Rad 2a bis 2d des Kraftfahrzeuges während der Aussendung des verlängerten Hochfrequenzsignals mindestens eine Umdrehung macht.

Figur 2 zeigt ein Diagramm, in dem das von den Drehzahlsensoren 12a bis 12d erzeugte Signal über der Zeit aufgetragen ist. Bei den Drehzahlsensoren 12a bis 12d kann es sich beispielsweise um Sensoren eines Schlupfregelsystems handeln, die an sich bekannt sind und eine Zahnradscheibe mit einer gewissen Anzahl von Zähnen aufweisen. Bei einer vollen Umdrehung des Kraftfahrzeugrades 2a bis 2d erzeugt jeder Zahn der Zahnradscheibe des entsprechenden Drehzahlsensors 12a bis 12d einen Impuls, so daß in der Zentraleinheit 10 (s. Figur 1) aus der Anzahl der Impulse zwischen zwei Zeitpunkten die Umdrehungszahl zwischen den Zeitpunkten berechnet werden kann. Bei dem in der Figur 2 gezeigten Diagramm wurde beispielsweise davon ausgegangen, daß die Zahnradscheibe 6 Zähne aufweist. Da das Diagramm zwischen den Zeitpunkten t₀ und t₁ 12 Signale aufweist, hat das Kraftfahrzeugrad 2a bis 2d zwischen diesen Zeitpunkten also zwei Umdrehungen gemacht.

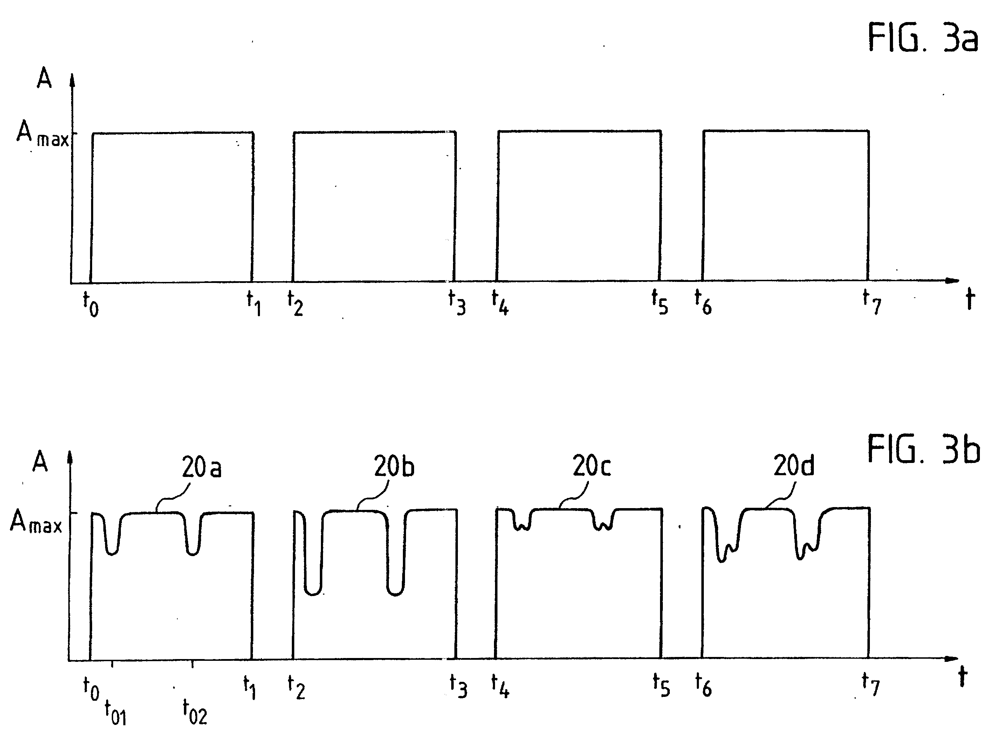

Figur 3a zeigt ein Diagramm, in dem der Betrag der Amplitude der verlängerten Hochfrequenzsignale, die von den Reifendruckkontrollvorrichtungen 4a bis 4d erzeugt werden, über der Zeit aufgetragen ist. Das Hochfrequenzsignal zwischen den Zeitpunkten t₀ und t₁ wird von der Reifendruckkontrollvorrichtung 4a, das Hochfrequenzsignal zwischen den Zeitpunkten t₂ und t₃ wird von der Reifendruckkontrollvorrichtung 4b, das Hochfrequenzsignal zwischen den Zeitpunkten t₄ und t₅ wird von der Reifendruckkontrollvorrichtung 4c und das Hochfrequenzsignal zwischen den Zeitpunkten t₆ und t₇ wird von der Reifendruckkontrollvorrichtung 4d erzeugt. Dem Diagramm ist zu entnehmen, daß der Amplitudenbetrag jedes erzeugten Hochfrequenzsignales während der gesamten Länge den Wert Aₘₐₓ erreicht (in Wirklichkeit handelt es sich bei den Hochfrequenzsignalen um Schwingungssignale, so daß der maximale Amplitudenbetrag während eines Schwingungsvorganges zweimal erreicht wird; da es sich jedoch um ein Hochfrequenzsignal handelt, liegen die beiden Maximalwerte während einer Schwingungsperiode so dicht beieinander, daß vereinfacht nur die "umhüllende Kurve" des Amplitudenbetrages gezeichnet wurde). Die Zeitintervalle zwischen den Zeitpunkten t₀ und t₁ bzw. zwischen t₂ und t₃, t₄ und t₅, t₆ und t₇ sind so lang, daß das entsprechende Kraftfahrzeugrad 2a bis 2d, dessen Reifendruckkontrollvorrichtung das verlängerte Hochfrequenzsignal erzeugt hat, in den genannten Zeitintervallen mindestens eine Umdrehung gemacht hat.

Figur 3b zeigt ein Diagramm, in dem der von der Zentraleinheit 10 empfangene Amplitudenbetrag der verlängerten Hochfrequenzsignale über der Zeit aufgetragen ist. Dem Diagramm ist zu entnehmen, daß die Zentraleinheit 10 im Zeitintervall von t₀ bis t₁ von der Reifendruckkontrollvorrichtung 4a ein Hochfrequenzsignal mit dem Verlauf 20a, in dem Zeitintervall von t₂ bis t₃ von der Reifendruckkontrollvorrichtung 4b ein Hochfrequenzsignal mit dem Verlauf 20b, im Zeitintervall von t₄ bis t₅ von der Reifendruckkontrollvorrichtung 4c ein Hochfrequenzsignal mit dem Verlauf 20c und im Zeitintervall von t₆ bis t₇ ein Hochfrequenzsignal mit dem Verlauf 20d empfängt. Die empfangene Maximalamplitude des Hochfrequenzsignals 20a weist weitestgehend über das gesamte Zeitintervall von t₀ bis t₁ den Maximalbetrag Aₘₐₓ auf. Lediglich im Bereich der Zeiten t₀₁ und t₀₂ wird von der Zentraleinheit 10 eine deutlich verringerte maximale Amplitude empfangen. Ein derartiger Verlauf der von der Zentraleinheit 10 empfangenen Amplitude über der Zeit ist auf folgendes zurückzuführen: Die Reifendruckkontrollvorrichtung 4a dreht sich während der Aussendung des verlängerten Hochfrequenzsignal mit dem Kraftfahrzeugrad 2a. Dadurch nimmt die Reifendruckkontrollvorrichtung 4a zu dem Radkasten bzw. zu der Bodenaufstandsfläche des Rades 2a immer eine andere Position ein. Durch Interferenzen im übertragenen Hochfrequenzsignal oder andere Effekte kommt es dazu, daß die Amplitude des Hochfrequenzsignals nicht mehr im gesamten Zeitintervall den gleichen Maximalwert erreicht, sondern sich in bestimmten relativen Winkelpositionen der Reifendruckkontrollvorrichtung 4a verändert. Eine Veränderung der übermittelten Amplitude findet immer in der gleichen Winkelposition der Reifendruckkontrollvorrichtung 4a statt. Die Zentraleinheit 10 empfängt also ein verlängertes Hochfrequenzsignal 20a von der Reifendruckkontrollvorrichtung 4a, das einen vom Rotationswinkel des Rades und von der Zeit abhängigen individuellen Verlauf aufweist. Auch die anderen Hochfrequenzsignale 20b, 20c und 20d weisen einen vom Rotationswinkel des entsprechenden Rades und von der Zeit abhängigen individuellen Verlauf auf.

Dem Verlauf des Hochfrequenzsignales 20a ist zu entnehmen, daß das Rad 2a, von dem aus das verlängerte Hochfrequenzsignal gesendet wurde, zu den Zeitpunkten t₀₁ und t₀₂ die gleiche Winkelposition einnimmt, zwischen diesen beiden Zeitpunkten also eine ganze Umdrehung gemacht hat (in der Figur 3b ist das Zeitintervall von t₀ bis t₁ so lang gewählt, daß das Kraftfahrzeugrad 2a zwischen diesen beiden Zeitpunkten ca. 2 Umdrehungen macht).

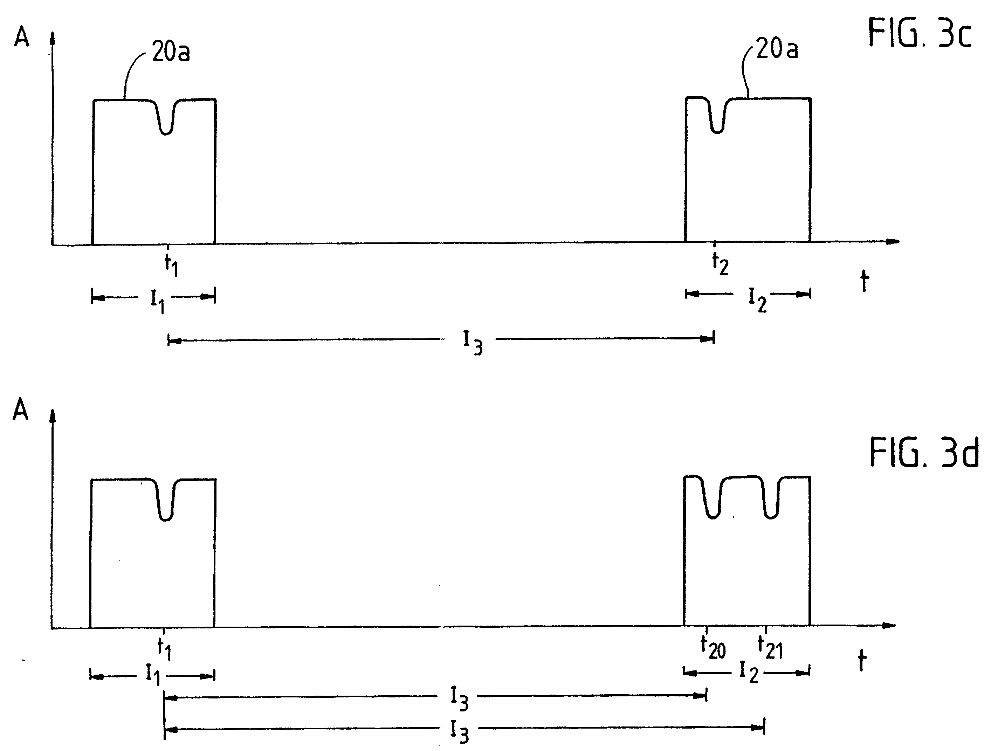

Im Zusammenhang mit der Figur 3c wird nun erläutert, wie mit Hilfe der verlängerten Hochfrequenzsignale 20a eine Zuordnung der Reifendruckkontrollvorrichtung 4a zur entsprechenden Radposition, in der diese sich befindet, erfolgt: Zunächst sendet die Reifendruckkontrollvorrichtung 4a ihre individuelle Kennung an die Zentraleinheit 10. Danach sendet die Reifendruckkontrollvorrichtung 4a ein über ein erstes Zeitintervall I₁ andauerndes erstes verlängertes Hochfrequenzsignal 20a an die Zentraleinheit 10 aus. Infolge der Rotation des Rades weist das verlängerte Hochfrequenzsignal 20a einen vom Rotationswinkel des Rades bzw. von der Zeit abhängigen individuellen Verlauf auf, so daß von der Zentraleinheit 10 das in der Figur 3c gezeigte Hochfrequenzsignal empfangen wird. Die gleiche Reifendruckkontrollvorrichtung 4a sendet zu einem beliebigen späteren Zeitpunkt zunächst wieder ihre individuelle Kennung an die Zentraleinheit 10. Darüber hinaus sendet die Reifendruckkontrollvorrichtung 4a ein über ein zweites Zeitintervall I₂ andauerndes zweites verlängertes Hochfrequenzsignal 20a an die Zentraleinheit 10. Beide Zeitintervalle sind so lang, daß das der Reifendruckkontrollvorrichtung 4a zugeordnete Rad 2a in dem entsprechenden Zeitintervall zumindest eine Umdrehung macht. Somit weisen beide verlängerten Hochfrequenzsignale mit Sicherheit die im Zusammenhang mit den Figuren 3a und 3b erläuterte Verringerung der Amplitude des Hochfrequenzsignals auf, das erste verlängerte Hochfrequenzsignal 20a nämlich zum ersten Zeitpunkt t₁ und das zweite verlängerte Hochfrequenzsignal 20a zum zweiten Zeitpunkt t₂. Da die Verringerung der Amplitude der Hochfrequenzsignale jeweils in der gleichen Winkelposition stattfindet, hat das Rad 2a, das der Reifendruckkontrollvorrichtung 4a zugeordnet ist, in dem dritten Zeitintervall I₃ von t₁ bis t₂ eine ganzzahlige Anzahl von Umdrehungen gemacht. In der Zentraleinheit 10 wird nun ausgewertet, wieviele Signale in dem Zeitintervall I₃ von den Drehzahlsensoren 12a bis 12d über die Übertragungswege 14a bis 14d an diese übermittelt worden sind. Daraufhin wird dort aus der Anzahl der übertragenen Signale berechnet, wieviele Umdrehungen die den Drehzahlsensoren 12a bis 12d zugeordneten Räder 2a bis 2d in dem Zeitintervall I₃ gemacht haben. Die von der Reifendruckkontrollvorrichtung 4a übermittelte individuelle Kennung wird derjenigen Radposition zugeordnet, in der das Rad in dem Zeitintervall I₃ eine ganzzahlige Anzahl von Umdrehungen gemacht hat.

Beispiel: Von den Drehzahlsensoren 12a bis 12d wurden im Zeitintervall I₃ folgenden Anzahlen von Signalen an die Zentraleinheit 10 übermittelt Drehzahlsensor 12a - 606 Signale; Drehzahlsensor 12b - 603 Signale; Drehzahlsensor 12c - 603 Signale; Drehzahlsensor 12d - 602 Signale. In der Zentraleinheit werden daraus folgende Umdrehungszahlen berechnet, wenn man davon ausgeht, daß die Zahnscheibe der Drehzahlsensoren 6 Zähne aufweist: Umdrehungszahl des Rades 2a - 100,1; Umdrehungszahl des Rades 2b - 100,5; Umdrehungszahl des Rades 2c - 100,5; Umdrehungszahl des Rades 2d - 100,3. Demzufolge hat im Zeitintervall I₃ das Rad 2a in der Radposition "vorne rechts" eine ganzzahlige Anzahl von Umdrehungen gemacht. Infolgedessen wird in der Zentraleinheit 10 die von der Reifendruckkontrollvorrichtung 4a übermittelte individuelle Kennung der Radposition "vorne rechts" zugeordnet. Die übrigen Reifendruckkontrollvorrichtungen 4b bis 4d werden in gleicher Art und Weise den Radpositionen zugeordnet.

Figur 3d zeigt weitgehend das gleiche Diagramm wie Figur 3c. Der einzige Unterschied ist darin zu sehen, daß im Intervall I₂ eine Verringerung der Amplitude des verlängerten Hochfrequenzsignals zweimal auftritt, das entsprechende Kraftfahrzeugrad also im Intervall I₂, das genauso lang ist wie das Intervall I₁, die entsprechende Winkelposition, in der die Verringerung stattfindet, zweimal einnimmt. Eine solche Fall-Konstellation kann beispielsweise dadurch auftreten, daß das Kraftfahrzeugrad sich im Zeitintervall I₂ mit einer größeren Geschwindigkeit dreht als im Zeitintervall I₁. In diesem Fall kann das Zeitintervall 13, in dem das entsprechende Kraftfahrzeugrad eine ganzzahlige Anzahl von Umdrehungen gemacht hat, entweder von t₁ bis t₂₀ oder von t₁ bis t₂₁ gewählt werden und entsprechend wie im Zusammenhang mit der Figur 3c erläutert vorgegangen werden.

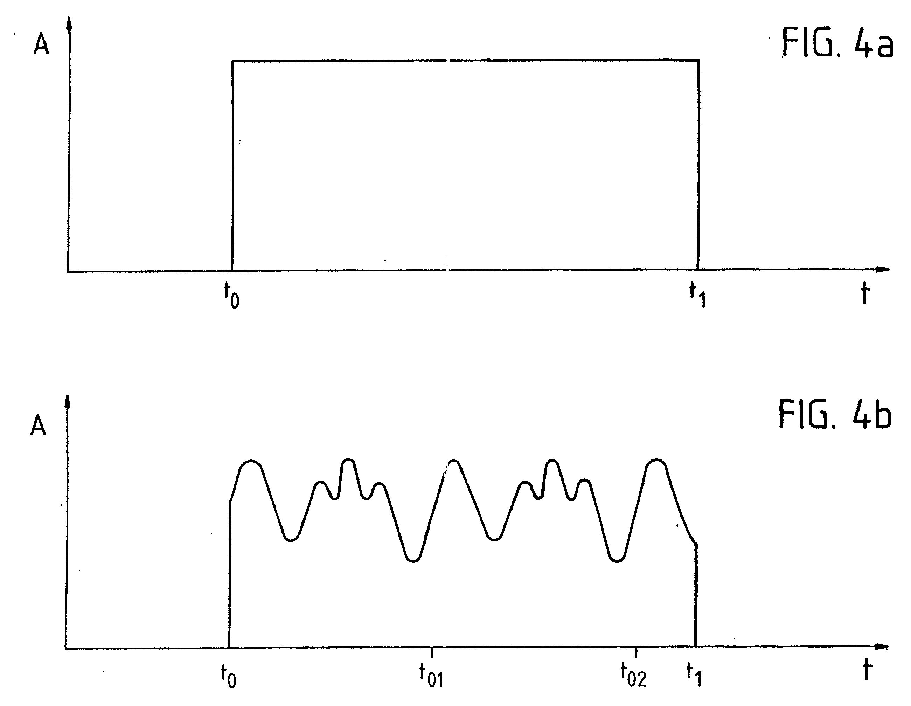

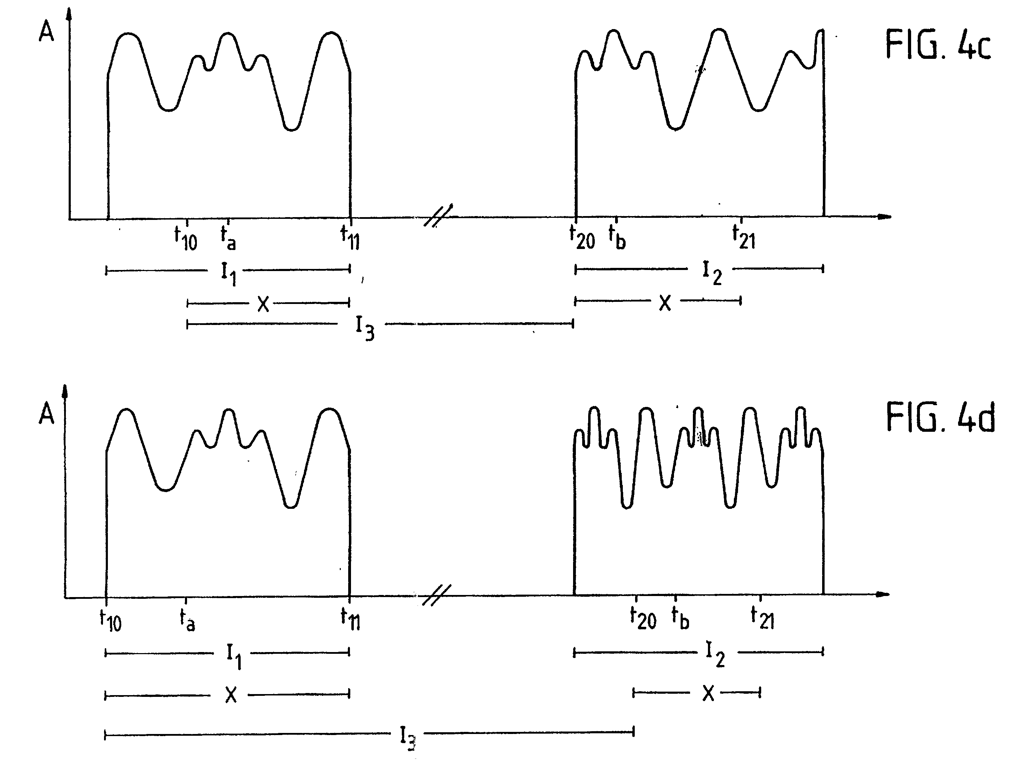

Bei dem im Zusammenhang mit der Figur 3 erläuterten Ausführungsbeispiel der Erfindung wurde davon ausgegangen, daß das von der Zentraleinheit 10 empfangene verlängerte Hochfrequenzsignal bei jeder Umdrehung des Rades genau eine signifikante Stelle aufweist, nämlich eine Verringerung der Amplitude des Hochfrequenzsignals an einer Stelle. Im Zusammenhang mit Figur 4 wird ein Ausführungsbeispiel der Erfindung erläutert, bei dem sich der Verlauf des von der Zentraleinheit 10 empfangenen verlängerten Hochfrequenzsignals über die gesamte Umdrehung des Rades gegenüber dem von der Reifendruckkontrollvorrichtung ausgesendeten Hochfrequenzsignal verändert.

Figur 4a zeigt ein Diagramm, in dem der Betrag der Amplitude eines von der Reifendruckkontrollvorrichtung 4a erzeugten verlängerten Hochfrequenzsignals über der Zeit aufgetragen ist. Das Hochfrequenzsignal wird von der Reifenkontrollvorrichtung 4a in dem Zeitintervall von t₀ bis t₁ gesendet. Das Diagramm gemäß der Figur 4 ist analog zu dem in der Figur 3a gezeigten Diagramm auf, so daß diesbezüglich auf die entsprechende Figurenbeschreibung verwiesen wird.

Figur 4b zeigt ein Diagramm, in dem der Betrag der von der Zentaleinheit 10 empfangenen Amplitude über der Zeit aufgetragen ist. Aufgrund der Rotation des Rades und aufgrund der sich verändernden Winkelposition der Reifendruckkontrollvorrichtung 4a zum Radkasten empfängt die Zentraleinheit 10 ein verlängertes Hochfrequenzsignal, das einen von der Zeit bzw. dem Rotationswinkel des Rades abhängigen individuellen Verlauf aufweist. Da der Verlauf des von der Zentraleinheit 10 empfangenen Hochfrequenzsignals von dem Rotationswinkel des Rades abhängt, weist es einen periodischen Verlauf auf, wobei die Länge der Periode durch die Dauer einer Umdrehung des Kraftfahrzeugrades bestimmt ist. Bei dem in der Figur 4b gezeigten Beispiel überdeckt eine Periode ein Zeitintervall von t₀ bis t₀₁ bzw. von t₀₁ bis t₀₂ und das Rad 2a, von dem das verlängerte Hochfrequenzsignal ausgesendet wird, macht im Zeitintervall von t₀ bis t₁ ca. zwei Umdrehungen.

Im Zusammenhang mit der Figur 4c wird erläutert, wie mit Hilfe der von der Reifendruckkontrollvorrichtung 4a erzeugten verlängerten Hochfrequenzsignale die Zuordnung dieser zu einer Radposition vorgenommen werden kann. Die Reifendruckkontrollvorrichtung 4a sendet zu einem beliebigen Zeitpunkt zunächst ihre individuelle Kennung und unmittelbar danach ein über ein erstes Zeitintervall I₁ andauerndes erstes verlängertes Hochfrequenzsignal aus. Von der Zentraleinheit 10 wird die individuelle Kennung und das in der Figur 4c links gezeigte erste verlängerte Hochfrequenzsignal empfangen. Zu einem beliebigen späteren Zeitpunkt sendet die gleiche Reifendruckkontrollvorrichtung 4a wiederum ihre individuelle Kennung und unmittelbar danach ein über ein zweites Zeitintervall I₂ andauerndes zweites verlängertes Hochfrequenzsignal an die Zentraleinheit 10 aus. Von der Zentraleinheit 10 wird das in der Figur 4a rechts gezeigte zweite verlängerte Hochfrequenzsignal empfangen. Die beiden Zeitintervalle I₁, I₂ sind mindestens so lang, daß das Rad 2a, von dem aus die verlängerten Hochfrequenzsignale gesendet werden, in diesem Zeitintervall mindestens eine Umdrehung macht. Vorzugsweise sind die beiden Zeitintervalle I₁ und I₂ gleich lang.

In der Zentraleinheit 10 werden die beiden empfangenen verlängerten Hochfrequenzsignale so übereinander geschoben, daß sich eine maximale Überlappung dieser Signale ergibt. Der Figur 4c ist zu entnehmen, daß bei dem gezeigten Beispiel im ersten Zeitintervall I₁ der maximale Überlappungsbereich X vom Zeitpunkt t₁₀ bis zum Zeitpunkt t₁₁ und im Zeitintervall I₂ vom Zeitpunkt t₂₀ bis zum Zeitpunkt t₂₁ reicht.

In den beiden Überlappungsbereichen nimmt das Rad 2a, von dem aus das verlängerte Hochfrequenzsignal gesendet wurde, zu einander entsprechenden Zeitpunkten die gleiche Winkelposition ein. Beispielsweise wird zum Zeitpunkt t₁₀ von dem Rad 2a die gleiche Winkelposition eingenommen wie zum Zeitpunkt t₂₀ und zum Zeitpunkt t₁₁ die gleiche Winkelposition eingenommen wie zum Zeitpunkt t₂₁. Entsprechendes gilt für alle zwischen den Zeitpunkten t₁₀ und t₁₁ bzw. t₂₀ und t₂₁ liegenden Zeitpunkten, wenn der zwischen den Zeitpunkten t₂₀ und t₂₁ liegende Zeitpunkt den gleichen Abstand zu t₂₀ hat, wie der zwischen den Zeitpunkten t₁₀ und t₁₁ liegende Zeitpunkt zum Zeitpunkt t₁₀.

Das Rad 2a, von dem aus das verlängerte Hochfrequenzsignal ausgesendet wurde, macht zwischen zwei entsprechend gewählten Zeitpunkten, also beispielsweise zwischen den Zeitpunkten t₁₀ und t₂₀ (d. h. im Zeitintervall I₃) eine ganzzahlige Anzahl von Umdrehungen. Mit Hilfe der Drehzahlsensoren 12a bis 12d wird nun von der Zentraleinheit 10 überprüft, welches Rad des Kraftfahrzeuges im Zeitintervall I₃ eine ganzzahlige Anzahl von Umdrehungen gemacht hat. Dies geschieht, wie es bereits im Zusammenhang mit der Figur 3 erläutert worden ist, so daß an dieser Stelle auf die entsprechenden Ausführungen verwiesen wird. Die von der Reifendruckkontrollvorrichtung 4a übertragene individuelle Kennung wird der entsprechenden Radposition (im Beispiel "vorne rechts") zugeordnet. Die übrigen Reifendruckkontrollvorrichtungen 4b bis 4d werden auf die gleiche Art und Weise ihren Radpositionen zugeordnet.

Bei der Figur 4c wurde davon ausgegangen, daß das Rad 2a, von dem das verlängerte Hochfrequenzsignal ausgesendet wird, in den beiden Zeitintervallen I₁ und I₂ eine gleiche Anzahl von Umdrehungen gemacht wird. Dies ist (zumindest in sehr guter Näherung) sicher richtig, wenn man davon ausgeht, daß der zeitliche Abstand zwischen den beiden Zeitintervallen nur wenige Zehntelsekunden beträgt, da sich in den seltesten Fällen während des Betriebes eines Kraftfahrzeuges innerhalb einer derartig kurzen Zeitspanne die Umdrehungsgeschwindigkeit der Kraftfahrzeugräder grundlegend ändert.

Im Zusammenhang mit Figur 4d wird das Verfahren für den Fall erläutert, daß die beiden Zeitintervalle I₁ und I₂ gleich lang sind, daß im Zeitintervall I₂ die Umdrehungsgeschwindigkeit des Rades, von dem aus das Hochfrequenzsignal gesendet wurde, jedoch höher ist als im Zeitintervall I₁. Vor Übermittlung der verlängerten Hochfrequenzsignale sendet die Reifendruckkontrollvorrichtung ihre individuelle Kennung an die Zentraleinheit 10 aus. Aus diesem Grunde "weiß" die Zentraleinheit 10, daß sowohl das erste verlängerte Hochfrequenzsignal, das im Zeitintervall I₁ ausgesendet wurde, als auch das zweite Hochfrequenzsignal, das im Zeitintervall I₂ ausgesendet wurde, von der gleichen Reifendruckkontrollvorrichtung stammt. Ferner "weiß" die Zentraleinheit, daß das Rad, von dem aus die Hochfrequenzsignale ausgesendet wurden, in beiden Zeitintervallen mindestens eine Umdrehung gemacht hat. Aus diesem Grunde muß es - abgesehen von einer Stauchung bzw. Streckung des Signalverlaufes in beiden Zeitintervallen - übereinstimmende Signalabschnitte geben. Lassen sich die beiden Signale also auch bereichsweise nicht ohne Stauchung bzw. Streckung zur Deckung bringen, so staucht bzw. streckt die Zentraleinheit eines der beiden Signale, bevor sie zur Deckung gebracht werden. Dabei wird in der Zentraleinheit 10 festgestellt, daß das Rad im Überlappungsbereich X zwischen den Zeitpunkten t₁₀ und t₁₁ bzw. zwischen den Zeitpunkten t₂₀ und t₂₁ zueinander entsprechenden Zeitpunkten jeweils die gleiche Winkelposition eingenommen hat. Beispielsweise wird die gleiche Winkelposition zu den Zeitpunkten t₁₀ und t₂₀ bzw. t₁₁ und t₂₁ eingenommen. Entsprechendes gilt für die zwischen den Zeitpunkten t₁₀ und t₁₁ bzw. t₂₀ und t₂₁ liegenden Zeiten. Beispielsweise hat das Rad 2a zu den Zeitpunkten tₐ und t_{b} die gleiche Winkelposition eingenommen, da der Zeitpunkt tₐ von dem Zeitpunkt t₁₀ den gleichen relativen Abstand hat, wie der Zeitpunkt t_{b} von dem Zeitpunkt t₂₀. Allgemein formuliert läßt sich sagen, daß von dem Rad 2a zu zwei Zeitpunkten tₐ und t_{b} die gleiche Winkelposition genau dann eingenommen wird, wenn folgendes gilt: tₐ - t₁₀/t₁₁ - t₁₀ = t_{b} - t₂₀/t₂₁ - t₂₀.

Sind zwei Zeitpunkte, in denen das Rad 2a eine übereinstimmende Winkelposition einnimmt, festgelegt, so steht fest, daß es im Zeitintervall I₃ zwischen diesen beiden Zeitpunkten eine ganzzahlige Anzahl von Umdrehungen gemacht hat. Die Zuordnung der von dem Rad 2a übermittelten individuellen Kennung zu der Radposition kann dann so erfolgen, wie es im Zusammenhang mit der Figur 3 bereits erläutert worden ist. Die individuellen Kennungen der übrigen Reifendruckkontrollvorrichtungen 4a - 4d werden entsprechend den Radpositionen zugeordnet.

Das im Zusammenhang mit den Figuren 4c und 4d erläuterte Verfahren zur Auffindung des Überlappungsbereiches zweier Signale wird als "Kreuzkorrelation" bezeichnet und ist dem Fachmann an sich bekannt, so daß es an dieser Stelle nicht näher erläutert werden soll.

### Bezugszeichenliste

- 2a - 2d: Kraftfahrzeugrad
- 4a - 4d: Reifendruckkontrollvorrichtung
- 6: Empfänger
- 8: Übertragungsweg
- 10: Zentraleinheit
- 12a - 12d: Drehzahlsensor
- 14a - 14d: Übertragungsweg
- 16a - 16d: Fliehkraftsensor
- 18: Zentraler Sender
- 20a - 20d: Verlauf eines Hochfrequenzsignals

## Patentansprüche

1. Verfahren zur Durchführung der Zuordnung von Reifendruckkontrollvorrichtungen (4a - 4d) zu Radpositionen in einem Reifendruckkontrollsystem eines Kraftfahrzeuges, das u. a. folgende Bestandteile enthält:
- eine Anzahl von Rädern (2a - 2d), wobei jedem Rad (2a - 2d) eine Reifendruckkontrollvorrichtung (4a - 4d) zugeordnet ist, die in zeitlichen Abständen eine individuelle Kennung an eine Zentraleinheit (10) sendet,
- Drehzahlsensoren (12a - 12d), von denen jeweils einer ortsfest einem Rad (2a- 2d) des Kraftfahrzeuges zugeordnet ist, wobei die Zuordnung der Drehzahlsensoren (12a - 12d) zu den Radpositionen der Zentraleinheit (10) bekannt ist,
- eine Zentraleinheit (10), in der die Zuordnung (Kennung der Reifendruckkontrollvorrichtung/Radposition) für jedes Rad (2a - 2d) gespeichen ist
bei dem die Zuordnung einer Reifendruckkontrollvorrichtung (4a - 4d) zu der Radposition im Betrieb des Kraftfahrzeuges durchgeführt wird
**dadurch gekennzeichnet ; daß**
das Verfahren in folgenden Verfahrensschritten durchgeführt wird:
- eine einem Rad (2a - 2d) zugeordnete Reifendruckkontrollvorrichtung (4a - 4d) sendet zu einem beliebigen Zeitpunkt ihre individuelle Kennung und ein über ein erstes Zeitintervall I₁ andauerndes erstes verlängertes Hochfrequenzsignal an die Zentraleinheit (10) aus, das in Folge der Rotation des Rades einen vom Rotationswinkel des Rades bzw. von der Zeit abhängigen individuellen Verlauf aufweist
- die gleiche Reifendruckkontrollvorrichtung (4a - 4d) sendet zu einem beliebigen späteren Zeitpunkt ihre individuelle Kennung und ein über ein zweites Zeitintervall I₂ andauerndes zweites verlängertes Hochfrequenzsignal an die Zentraleinheit (10) aus, das zumindest bereichsweise den gleichen vom Rotationswinkel des Rades bzw. von der Zeit abhängigen individuellen Verlauf aufweist wie das erste verlängerte Hochfrequenzsignal
- in der Zentraleinheit (10) wird aus dem Verlauf des ersten verlängerten Hochfrequenzsignals ein erster Zeitpunkt bestimmt, in dem das Rad (2a - 2d) eine beliebige relative Winkelposition einnimmt
- in der Zentraleinheit (10) wird aus dem Verlauf des zweiten verlängerten Hochfrequenzsignals ein zweiter Zeitpunkt bestimmt, in dem das Rad (2a - 2d) die gleiche relative Winkelposition einnimmt wie zum ersten Zeitpunkt
- in der Zeintraleinheit (10) wird mittels der Signale der Drehzahlsensoren (12a - 12d) die Umdrehungszahl bestimmt, die die Räder (2a - 2d) in einem dritten Zeitintervall I₃ von dem ersten Zeitpunkt bis zu dem zweiten Zeitpunkt gemacht haben
- in der Zentraleinheit (10) wird geprüft, welches Rad (2a - 2d) in welcher Radposition im dritten Zeitintervall I₃ eine ganzzahlige Anzahl von Umdrehungen gemacht hat
- in der Zentraleinheit (10) wird die entsprechende Radposition der von der Reifendruckkontrollvorrichtung (4a - 4d) übermittelten individuellen Kennung zugeordnet.

2. Verfahren nach Anspruch 1, **dadurch gekennzeichnet, daß** jedes Hochfrequenzsignal von der Reifendruckkontrollvorrichtung (4a - 4d) mit konstanter Maximalamplitude ausgesendet wird, die infolge der Rotation des Rades (2a - 2d), von dem aus das verlängerte Hochfrequenzsignal gesendet wird, einen vom Rotationswinkel des Rades (2a - 2d) bzw. von der Zeit abhängigen individuellen Verlauf bekommt.

3. Verfahren nach einem der Ansprüche 1 bis 2, **dadurch gekennzeichnet, daß** jedes Zeitintervall, währenddem ein verlängertes Hochfrequenzsignal von einem Rad (2a - 2d) aus gesendet wird, mindestens so lang ist, daß das Rad (2a - 2d) in dem Zeitintervall mindestens eine Umdrehung macht.

4. Verfahren nach einem der Ansprüche 1 bis 3, **dadurch gekennzeichnet, daß** in jeder Reifendruckkontrollvorrichtung (4a - 4d) eine bestimmte Länge vorgegeben ist, die für alle von dieser Reifendruckkontrollvorrichtung (4a - 4d) ausgesendeten verlängerten Hochfrequenzsignale gleich ist.

5. Verfahren nach Anspruch 4, **dadurch gekennzeichnet, daß**
- jede Reifendruckkontrollvorrichtung (4a 4d) über einen Fliehkraftsensor (16a - 16d) verfügt, der oberhalb einer vorgegebenen Umdrehungszahl des Rades, dem die Reifendruckkontrollvorrichtung (4a - 4d) zugeordnet ist, ein Signal erzeugt und daß
- eine Reifendruckkontrollvorrichtung (4a - 4d) ein verlängertes Hochfrequenzsignal mit vorgegebener Länge nur dann sendet, wenn das Signal des Fliehkraftsensors (16a - 16d) vorliegt

6. Verfahren nach einem der Ansprüche 1 bis 3, **dadurch gekennzeichnet, daß** das Reifendruckkontrollsystem über einen zentralen Sender (18) verfügt und jede der Reifendruckkontrollvorrichtungen (4a - 4d) über einen Empfänger (6) verfügt, und daß folgende Verfahrensschritte durchgeführt werden:
- der zentrale Sender (18) sendet ein Signal an alle Reifendruckkontrollvorrichtungen (4a - 4d)
- unmittelbar nach Empfang des Signals sendet jede Reifendruckkontrollvorrichtung (4a - 4d) ein verlängertes Hochfrequenzsignal an die Zentraleinheit (10).

7. Verfahren nach Anspruch 6, **dadurch gekennzeichnet, daß** der zentrale Sender (18) eine Information über die Länge des von den Reifendruckkontrollvorrichtungen (4a - 4d) auszusendenden verlängerten Hochfrequenzsignales an die Reifendruckkontrollvorrichtungen (4a - 4d) sendet.

8. Verfahren nach einem der Ansprüche 1 bis 7, **dadurch gekennzeichnet, daß** es durch Betätigung eines Schalters gestartet wird.

9. Verfahren nach einem der Ansprüche 1 bis 7, **dadurch gekennzeichnet, daß** es nach Einschalten der Zündung des Kraftfahrzeuges automatisch gestartet wird, wenn diese zuvor für einen vorgegebenen Zeitraum ausgeschaltet war.

10. Verfahren nach einem der Ansprüche 1 bis 9, **dadurch gekennzeichnet, daß** die von den Reifendruckkontrollvorrichtungen (4a - 4d) übertragenen Signale amplitudenmoduliert sind, und daß jedes verlängerte Hochfrequenzsignal ein separates Signal ist, das mit konstanter Maximalamplitude gesendet wird.

11. Verfahren nach einem der Ansprüche 1 bis 9, **dadurch gekennzeichnet, daß** die von den Reifendruckkontrollvorrichtungen (4a - 4d) übertragenen Signale frequenzmoduliert sind und mit einer konstanten Maximalamplitude gesendet werden, und daß die individuelle Kennung in dem verlängerten Hochfrequenzsignal enthalten ist.

12. Verfahren nach einem der Ansprüche 1 bis 11, **dadurch gekennzeichnet, daß** im ersten und zweiten verlängerten Hochfrequenzsignal der erste und der zweite Zeitpunkt, in dem das Rad (2a - 2d) eine übereinstimmende relative Winkelposition einnimmt, durch Kreuzkorrelation bestimmt wird.

## Claims

1. Method of accomplishing the association between tyre pressure monitoring devices (4a - 4d) and wheel positions in a tyre pressure monitoring system of an automotive vehicle, said system including, inter alia, the following component parts:
- a number of wheels (2a - 2d), wherein each wheel (2a - 2d) has associated therewith a tyre pressure monitoring device (4a - 4d), which transmits at spaced-apart intervals of time an individual identification code to a central unit (10),
- speed sensors (12a - 12d), each one of which is associated in a fixed manner with a wheel (2a - 2d) of the automotive vehicle, the association between the speed sensors (12a - 12d) and the wheel positions being known to the central unit (10), and
- a central unit (10), in which the association (identification code of the tyre pressure monitoring device/wheel position) for each wheel (2a - 2d) is stored,
wherein the association between a tyre pressure monitoring device (4a - 4d) and the wheel position is accomplished during the operation of the automotive vehicle, **characterised in that** the method is accomplished in the following method steps:
- a tyre pressure monitoring device (4a - 4d), associated with a wheel (2a - 2d), transmits to the central unit (10) its individual identification code at any random moment in time and a first extended high-frequency signal, which lasts over a first time interval I₁, which signal has an individual configuration, dependent on the angle of rotation of the wheel, or respectively on the time, as a consequence of the rotation of the wheel,
- the same tyre pressure monitoring device (4a - 4d) transmits to the central unit (10) at any later moment in time its individual identification code and a second extended high-frequency signal, which lasts over a second interval of time I₂ and has the same individual configuration as the first extended high-frequency signal, said second signal being dependent on the angle of rotation of the wheel, or respectively on the time, at least in various sections,
- a first moment in time, in which the wheel (2a - 2d) assumes any relative angular position, is determined in the central unit (10) from the configuration of the first extended high-frequency signal,
- a second moment in time, in which the wheel (2a - 2d) assumes the same relative angular position as the first moment in time, is determined in the central unit (10) from the configuration of the second extended high-frequency signal,
- the number of revolutions, which the wheels (2a - 2d) have made in a third interval of time I₃, from the first moment in time to the second moment in time, is determined in the central unit (10) by means of the signals of the speed sensors (12a- 12d),
- to see which wheel (2a - 2d) has made a whole number of revolutions in which wheel position in the third interval of time I₃, checking is carried out in the central unit (10), and
- the corresponding wheel position is associated with the individual identification code, transferred by the tyre pressure monitoring device (4a - 4d), in the central unit (10).

2. Method according to claim 1, **characterised in that** each high-frequency signal is transmitted by the tyre pressure monitoring device (4a - 4d) with a constant maximum amplitude which, as a consequence of the rotation of the wheel (2a - 2d), from which the extended high-frequency signal is transmitted, is provided with an individual configuration dependent on the angle of rotation of the wheel (2a - 2d), or respectively on the time.

3. Method according to one of claims 1 to 2, **characterised in that** each interval of time, during which an extended high-frequency signal is transmitted from a wheel (2a - 2d), is at least so long that the wheel (2a - 2d) makes at least one revolution in the interval of time.

4. Method according to one of claims 1 to 3, **characterised in that** a predetermined length is prescribed in each tyre pressure monitoring device (4a - 4d), which length is the same for all of the extended high-frequency signals transmitted by this tyre pressure monitoring device (4a - 4d).

5. Method according to claim 4, **characterised in that**
- each tyre pressure monitoring device (4a - 4d) has a centrifugal force sensor (16a - 16d), which generates a signal above a prescribed number of revolutions of the wheel, which is associated with the tyre pressure monitoring device (4a - 4d), and **in that**
- a tyre pressure monitoring device (4a - 4d) transmits an extended high-frequency signal with a prescribed length only when the signal of the centrifugal force sensor (16a - 16d) is present.

6. Method according to one of claims 1 to 3, **characterised in that** the tyre pressure monitoring system has a central transmitter (18), and each of the tyre pressure monitoring devices (4a - 4d) has a receiver (6), and **in that** the following method steps are accomplished:
- the central transmitter (18) transmits a signal to all of the tyre pressure monitoring devices (4a - 4d), and
- immediately after receiving the signal, each tyre pressure monitoring device (4a - 4d) transmits an extended high-frequency signal to the central unit (10).

7. Method according to claim 6, **characterised in that** the central transmitter (18) transmits information about the length of the extended high-frequency signal, which is to be transmitted by the tyre pressure monitoring devices (4a - 4d), to the tyre pressure monitoring devices (4a - 4d).

8. Method according to one of claims 1 to 7, **characterised in that** it is started by the actuation of a switch.

9. Method according to one of clams 1 to 7, **characterised in that**, once the ignition of the automotive vehicle has been switched-on, said method is automatically started when said ignition had previously been switched-off for a prescribed period.

10. Method according to one of claims 1 to 9, **characterised in that** the signals, transferred by the tyre pressure monitoring devices (4a - 4d), are amplitude-modulated, and **in that** each extended high-frequency signal is a separate signal which is transmitted with a constant maximum amplitude.

11. Method according to one of claims 1 to 9, **characterised in that** the signals, transferred by the tyre pressure monitoring devices (4a - 4d), are frequency-modulated and transmitted with a constant maximum amplitude, and **in that** the individual identification code is contained in the extended high-frequency signal.

12. Method according to one of claims 1 to 11, **characterised in that** the first moment in time and the second moment in time, in which the wheel (2a - 2d) assumes an identical relative angular position, are determined in the first and second extended high-frequency signals by cross-wise correlation.

## Revendications

1. Procédé pour effectuer l'affectation de dispositifs de contrôle de la pression des pneumatiques (4a - 4d) à des positions de roues, dans un système de contrôle de la pression des pneumatiques d'un véhicule automobile qui comprend, entre autres, les composants suivants :
- un nombre de roues (2a - 2d) où, à chaque roue (2a - 2d), est affecté un dispositif de contrôle de la pression des pneumatiques (4a - 4d) qui envoie à une unité centrale (10), suivant des intervalles de temps, un caractère individuel d'identification,
- des capteurs de vitesse (12a - 12d) dont l'un des capteurs est à chaque fois affecté à une roue (2a - 2d) du véhicule automobile, à un emplacement fixe, où l'affectation des capteurs de vitesse (12a - 12d), aux positions de roues, est connue de l'unité centrale (10),
- une unité centrale (10) dans laquelle l'affectation (caractère d'identification du dispositif de contrôle de la pression des pneumatiques / position des roues) pour chaque roue (2a - 2d) est stockée en mémoire, procédé dans lequel est effectuée l'affectation d'un dispositif de contrôle de la pression des pneumatiques (4a - 4d), à la position des roues, au cours du fonctionnement du véhicule automobile,
**caractérisé en ce que** le procédé est effectué Au cours des étapes suivantes du procédé :
- un dispositif de contrôle de la pression des pneumatiques (4a - 4d), affecté à une roue (2a - 2d), envoie, à un moment quelconque, son caractère individuel d'identification et envoie à l'unité centrale (10), un premier signal continu prolongé à haute fréquence, via un premier intervalle de temps I₁, lequel signal à haute fréqucnce présente, suite à la rotation de la roue, un profil individuel dépendant de l'angle de rotation de la roue ou du temps,
- le même dispositif de contrôle de la pression des pneumatiques (4a - 4d) envoie, à un moment ultérieur quelconque, son caractère individuel d'identification, et envoie à l'unité centrale (10), via un deuxième intervalle de temps I₂, un second signal prolongé continu à haute fréquence qui présente, au moins par zones, le même profil individuel dépendant de l'angle de rotation de la roue ou du temps, que le premier signal prolongé à haute fréquence,
- dans l'unité centrale (10) est défini, à partir du profil du premier signal prolongé à haute fréquence, un premier moment au cours duquel la roue (2a - 2d) prend une position angulaire relative quelconque,
- dans l'unité centrale (10) est défini, à partir du profil du second signal prolongé à haute fréquence, un second moment au cours duquel la roue (2a - 2d) prend la même position angulaire relative que lors du premier moment,
- dans l'unité centrale (10) est déterminé, à l'aide des signaux des capteurs (12a - 12d), le nombre de tours qu'ont fait les roues (2a - 2d) dans un troisième intervalle de temps I₃, depuis le premier moment jusqu'au second moment,
- dans l'unité centrale (10), on contrôle quelle roue (2a - 2d), dans quelle position de roue, a fait un nombre complet de tours au cours du troisième intervalle de temps I₃,
- dans l'unité centrale (10), la position de roue correspondante est affectée au caractère individuel d'identification transmis par le dispositif de contrôle de la pression des pneumatiques (4a - 4d),

2. Procédé selon la revendication 1, **caractérisé en ce que** chaque signal à haute fréquence est émis, à une amplitude maximale constante, par le dispositif de contrôle de la pression des pneumatiques (4a - 4d), laquelle amplitude maximale, suite à la rotation de la roue (2a - 2d), à partir de laquelle est émis le signal prolongé à haute fréquence, a un profil individuel dépendant de l'angle de rotation de la roue (2a - 2d) ou du temps.

3. Procédé selon la revendication 1 ou 2, **caractérisé en ce que** chaque intervalle de temps, pendant lequel un signal prolongé à haute fréquence est émis par une roue (2a - 2d), est au moins d'une longueur telle, que la roue (2a - 2d) fait au moins un tour au cours de l'intervalle de temps.

4. Procédé selon l'une quelconque des revendications 1 à 3, **caractérisé en ce que**, dans chaque dispositif de contrôle de la pression des pneumatiques (4a - 4d), est prédéterminée une certaine longueur qui est la même pour tous les signaux prolongés à haute fréquence émis par ce dispositif de contrôle de la pression des pneumatiques (4a - 4d).

5. Procédé selon la revendication 4, **caractérisé**
- **en ce que** chaque dispositif de contrôle de la pression des pneumatiques (4a - 4d) dispose d'un capteur de force centrifuge (16a - 16d) qui, au-dessus d'un nombre de tours prédéterminé de la roue à laquelle est affecté le dispositif de contrôle de la pression des pneumatiques (4a - 4d), produit un signal, et
- **en ce qu'**un dispositif de contrôle de la pression des pneumatiques (4a - 4d) n'émet alors un signal prolongé à haute fréquence d'une longueur prédéterminée que si le signal du capteur de force centrifuge (16a - 16d) est présent.

6. Procédé selon l'une quelconque des revendications 1 à 3, **caractérisé en ce que** le système de contrôle de la pression des pneumatiques dispose d'un émetteur central (18) et chacun des dispositifs de contrôle de la pression des pneumatiques (4a - 4d) dispose d'un récepteur (6), et **en ce que** des étapes suivantes du procédé sont effectuées :
- l'émetteur central (18) envoie un signal à tous les dispositifs de contrôle de la pression des pneumatiques (4a - 4d),
- immédiatement après réception du signal, chaque dispositif de contrôle de la pression des pneumatiques (4a - 4d) envoie à l'unité centrale (10), un signal prolongé à haute fréquence.

7. Procédé selon la revendication 6, **caractérisé en ce que** l'émetteur central (18) envoie aux dispositifs de contrôle de la pression des pneumatiques (4a - 4d), une information concernant la longueur du signal prolongé à haute fréquence devant être émis par les dispositifs de contrôle de la pression des pneumatiques (4a - 4d).

8. Procédé selon l'une quelconque des revendications 1 à 7, **caractérisé en ce que** le procédé est lancé en actionnant un interrupteur.

9. Procédé selon l'une quelconque des revendications 1 à 7, **caractérisé en ce que** le procédé est lancé automatiquement après mise en marche de l'allumage du véhicule automobile si l'allumage a été coupé précédemment pendant un laps de temps prédéterminé.

10. Procédé selon l'une quelconque des revendications 1 à 9, **caractérisé en ce que** les signaux transmis par les dispositifs de contrôle de la pression des pneumatiques (4a - 4d) sont modulés en amplitude, et **en ce que** chaque signal prolongé à haute fréquence est un signal distinct qui est émis avec une amplitude maximale constante.

11. Procédé selon l'une quelconque des revendications 1 à 9, **caractérisé en ce que** les signaux transmis par les dispositifs de contrôle de la pression des pneumatiques (4a - 4d) sont modulés en fréquence et sont émis avec une amplitude maximale constante, et **en ce que** le caractère individuel d'identification est contenu dans le signal prolongé à haute fréquence.

12. Procédé selon l'une quelconque des revendications 1 à 11, **caractérisé en ce que**, dans les premier et second signaux prolongés à haute fréquence, les premier et second moments, au cours desquels la roue (2a - 2d) prend une position angulaire relative coïncidente, sont déterminés par corrélation croisée.
